# EUROPEAN PATENT SPECIFICATION

(11) **EP 0 611 597 B1**
(45) Date of publication and mention of the grant of the patent: **19.03.1997**
(21) Application number: 94200335.1
(22) Date of filing: 17.02.1994
(51) Int. Cl.: B01L 3/00, G01N 33/53

(54) **Microtitration unit**
Mikrotitriereinheit
Microunité de titration

(30) Priority: 19.02.1993 DE 9302423 U
(43) Date of publication of application: 24.08.1994
(73) Proprietor: GIST-BROCADES B.V., NL-2600 MA Delft (NL)
(72) Inventor: Müller, Frank J., F-47809 Krefeld (DE)
(74) Representative: Matulewicz, Emil Rudolf Antonius, Dr.

(56) References cited:
- EP-A- 0 408 144
- EP-A- 0 557 715
- DE-U- 9 215 793
- PATENT ABSTRACTS OF JAPAN vol. 8, no. 14 (P-249) (1451) 21 January 1984 & JP-A-58 174 851 (TOYO JOZO K. K.) 13 October 1983

## Description

The present invention concerns a microtitration unit having at least one container which comprises transparent material and which has an opening for accomodating a biological test reaction mixture.

Microtitration units of that kind which are generally in the form of a plate having a plurality of containers arranged in juxtaposed relationship are used for the routine investigation of biological fluids for medicament residues. The investigation essentially extends to the presence of antibiotics and sulphonamides. For that purpose the containers are partially filled with a biological test reaction mixture which is usually made up on the basis of agar-agar nutrient media and contains test micro-organisms and a colour indicator. The biological fluid to be investigated, for example milk, is pipetted onto the biological test reaction mixture in the container. The container is then possibly closed and then incubated at the optimum temperature of the test micro-organisms in an incubation cabinet or in a water bath. During the incubation operation any medicament residues diffuse out of the biolgical fluid to be investigated into the test reaction mixture and impede metabolism of the test micro-organisms. If metabolism occurs, there is a change in colour of the colour indicator, for example from blue to yellow. The presence of medicament residues is indicated by the absence of a change in colour.

In order to be able to detect all possible medicament residues, tests are required, with at least two different test reaction mixtures. That requires a plurality of test operations and is accordingly time-consuming and expensive.

The object of the present invention is to improve microtitration units of the kind set forth in the opening part of this specification, in such a way that tests of a sample are possible in one working operation, with a plurality of different test reaction mixtures.

In accordance with the invention that object is attained with the features of claim 1. The container is subdivided into at least two chambers suitable for accomodating different test reaction mixtures, by at least one partition which extends from the inside of the bottom and which is of smaller height than the internal height of the container.

A plurality of different test reaction mixtures can be introduced into a container or each container of a microtitration unit, more specifically preferably in such a way that the partition projects upwardly slightly above the filling level of the different test reaction mixtures introduced into the container. If then the biological fluid to be tested is subsequently introduced by means of a pipette, the biological fluid 'floods' over the different test chambers of a container if such an amount of biological test fluid is introduced by means of a pipette, that the test fluid also floods over the surface of the partition. In the incubation operation any medicament residues which are possibly present can then diffuse out of the sample which was jointly introduced by means of the pipette for the different test reaction mixtures, into the respective test reaction mixtures, and possibly impede metabolism of the respective test micro-organism. The test reaction mixtures which are introduced into the individual chambers of a respective container are suitable for indicating different medicament residues so that as a result a test with a plurality of test reaction mixtures and accordingly optimum detection can be effected by one operation of introducing a fluid to be investigated, by means of a pipette.

If there are no medicament residues in the biological fluid to be investigated, a change in colour occurs in all chambers of the container. If the biological fluid to be investigated contains medicaments in relatively small amounts, it is possible that only the test reaction mixture in one chamber of the container reacts positively. That result can then give a clear indication of the nature of the medicament residue present.

The invention is described in greater detail hereinafter by means of the embodiments diagrammatically illustrated in the drawing in which:
Figure 1A is a side view in section of a container according to the invention which has a screw closure, with two chambers and test reaction mixtures disposed therein,
Figure 1B shows a container as shown in Figure 1A, but with a biological test fluid introduced into same by a pipette, and
Figure 2 is a diagrammatic view of a plurality of containers which are arranged in juxtaposed relationship.

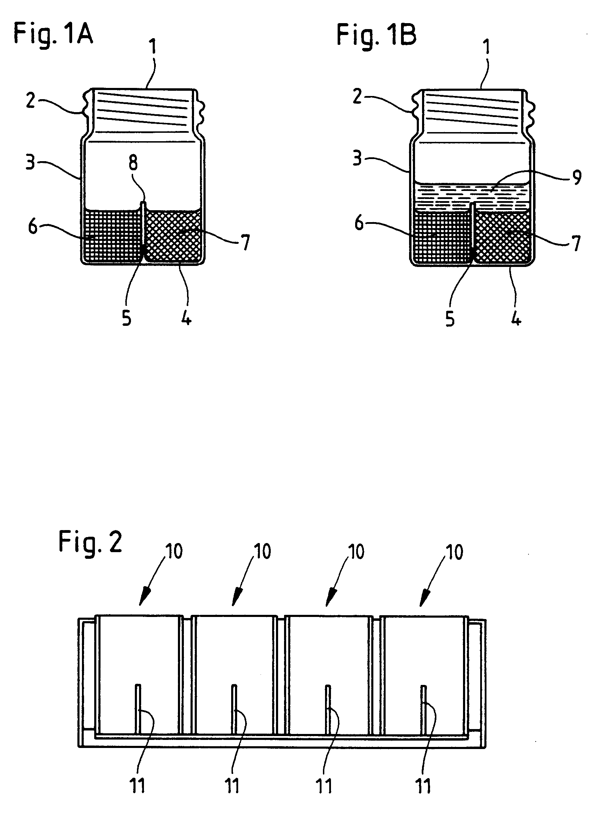

The container of which a side view is shown in Figures 1A and 1B comprises transparent material. The opening 1 which is disposed at the top can be closed by means of a cover (not shown) which can be screwed onto a screwthread 2. The container which is of a round configuration in plan view has a wall 3 and a bottom 4. Extending from the inside of the bottom in the container is a partition 5 whose height, as can be seen, is less than the internal height of the container. The partition 5 divides the container into two chambers in the illustrated embodiment. A test reaction mixture which is identified by reference 6 is introduced into the chamber shown on the left in the drawing while a test reaction mixture identified by reference numeral 7 is introduced in the chamber shown on the right. The test reaction mixtures 6 and 7 are made up on the basis of agar-agar nutrient media and contain test micro-organisms as well as a colour indicator. The test reaction mixtures 6 and 7 are of different compositions and are such that they are each suitable for indicating different medicament residues in biological fluids to be tested. The test reaction mixtures are introduced into the container to such a level that the top edge 8 of the partition 5 projects somewhat above the surface of the test reaction mixtures 6 and 7.

For carrying out the desired test, a biological fluid 9 to be investigated is introduced by means of a pipette, more specifically in such an amount that the top edge 8 of the partition 5 is flooded over thereby. The filling level of the biological test fluid to be investigated (for example milk) is shown in Figure 1B as being at an exaggerated height, for demonstration purposes.

In the illustrated embodiment a test can be carried out with the two different test reaction mixtures 6 and 7 with a single operation of introducing by means of a pipette a fluid to be investigated.

Figure 2 shows the arrangement of a plurality of containers 10 which are each subdivided by a partition 11 into chambers which are suitable for accomodating different test reaction mixtures.

It will be appreciated that it is also in accordance with the invention for partitions to be so disposed in the container that they provide more than two chambers which are suitable for accomodating different test reaction mixtures.

## Claims

1. A microtitration unit having at least one container which comprises transparent material and which has an opening for accommodating a biological test reaction mixture, characterised in that the container is subdivided into at least two chambers by at the least one partition (5) which extends from the inside of the bottom and which is of lower height than the internal height of the container the at least two chambers accommodating different biological test reaction mixtures (6, 7), the biological test reaction mixture being disposed in the chambers in such a way that the at least one partition projects above the filling level of the different biological test reaction mixtures and the biological test reaction mixtures are made up on the basis of agar-agar nutrient media.

2. A microtitration unit according to claim 1 characterised in that a plurality to containers (10) are arranged in juxtaposed relationship.

3. A method for testing a biological test fluid for medicament residues comprising
- introducing in a microtitration unit according to claim 1, such an amount of biological test fluid that the top edge of the at least one partition is flooded over by said biological test fluid and
- detecting the medicament residues.

## Patentansprüche

1. Mikrotitrationseinheit mit wenigstens einem Behälter, der einen durchsichtigen Werkstoff und eine Öffnung zur Aufnahme eines biologischen Testreaktionsgemisches aufweist, dadurch gekennzeichnet, daß der Behälter durch mindestens eine Trennwand (5), die sich von der Bodeninnenseite aus erstreckt und deren Höhe geringer ist als die Innenhöhe des Behälters, in mindestens zwei Kammern unterteilt ist, wobei die mindestens zwei Kammern verschiedene biologische Testreaktionsgemische (6,7) aufnehmen und das biologische Testreaktionsgemisch in den Kammern derart angeordnet wird, daß die mindestens eine Trennwand über das Füllniveau der verschiedenen biologischen Testreaktionsgemische hinausragt sowie die biologischen Testreaktionsgemische auf der Basis von Agar-Agar-Nährmedien gebildet werden.

2. Mikrotitrationseinheit nach Anspruch 1, dadurch gekennzeichnet, daß eine Mehrzahl von Behältern (10) nebeneinander angeordnet sind.

3. Verfahren zum Testen einer biologischen Testflüssigkeit auf Arzneimittelrückstände, bei dem in eine Mikrotitrationseinheit gemäß Anspruch 1 eine derartige Menge an biologischer Testflüssigkeit eingeführt wird, daß die Oberkante mindestens einer Trennwand von der biologischen Testflüssigkeit überflutet wird, und die Arzneimittelreste festgestellt werden.

## Revendications

1. Unité de microtitrage comportant au moins un récipient qui est fait d'une matière transparente et qui présente un orifice destiné à recevoir un mélange réactionnel de test biologique, caractérisée en ce que le récipient est subdivisé en au moins deux chambres par au moins une cloison (5) qui s'étend depuis l'intérieur du fond et dont la hauteur est inférieure à la hauteur intérieure du récipient, les au moins deux chambres recevant différents mélanges réactionnels de test biologique (6, 7), le mélange réactionnel de test biologique étant disposé dans les chambres d'une manière telle que ladite au moins une cloison s'étende au-dessus du niveau de remplissage des différents mélanges réactionnels de test biologique et les mélanges réactionnels de test biologique sont constitués sur la base de milieux nutritifs d'agar-agar.

2. Unité de microtitrage suivant la revendication 1, caractérisée en ce qu'une pluralité de récipients (10) sont agencés en juxtaposition.

3. Procédé de test d'un fluide de test biologique pour déceler des résidus de médicament comprenant les étapes consistant à
- introduire dans une unité de microtitrage suivant la revendication 1 une quantité de fluide de test biologique telle que le bord supérieur de ladite au moins une cloison soit noyé par ledit fluide de test biologique et
- détecter les résidus de médicament.
